# EUROPÄISCHE PATENTANMELDUNG

(11) **EP 2 262 065 A1**
(43) Veröffentlichungstag der Anmeldung: **15.12.2010**
(21) Anmeldenummer: 10176575.8
(22) Anmeldetag: 04.10.2004
(51) Int. Cl.: H01S 3/098, H01S 3/081

(54) **Kurzpuls-Laservorrichtung**

(30) Priorität: 13.11.2003 AT 18272003
(62) Teilanmeldung aus: 04761058.9
(71) Anmelder: Femtolasers Produktions GmbH, 2100 Korneuburg (AT)
(72) Erfinder: Apolonski, Alexander, 85748, Garching bei München (DE); Krausz, Ferenc, 85748, Garching bei München (DE); Stingl, Andreas, 2100, Korneuburg (AT); Fürbach, Alexander, 1160, Wien (AT)
(74) Vertreter: Sonn & Partner Patentanwälte

(57) **Zusammenfassung**

Kurzpuls-Laservorrichtung (11) mit vorzugsweise passiver Modenverkopplung, mit einem Resonator (12), der einen Laserkristall sowie mehrere Spiegel (M1-M7; 22, 23, OC) enthält, von denen einer einen Pumpstrahl-Einkoppelspiegel (22) und einer einen Laserstrahl-Auskoppelspiegel (OC) bildet, und mit einem die Resonatorlänge vergrößernden Mehrfachreflexions-Teleskop (18), wobei der Resonator (12) im Betrieb über einen betroffenen Wellenlängenbereich eine positive gemittelte Dispersion aufweist; die Einstellung der positiven gemittelten Dispersion des Resonators (12) ist mit Hilfe der Spiegel (M1-M7, 22, 23, OC) des Resonators (12) durchgeführt, von denen zumindest einige als dispersive Spiegel ausgeführt sind.

## Beschreibung

Die Erfindung betrifft eine Kurzpuls-Laservorrichtung mit vorzugsweise passiver Modenverkopplung, mit einem Resonator, der einen Laserkristall sowie mehrere Spiegel enthält, von denen einer einen Pumpstrahl-Einkoppelspiegel und einer einen Laserstrahl-Auskoppler bildet, und mit einem die Resonatorlänge vergrößernden Mehrfachreflexions-Teleskop, wobei der Resonator im Betrieb über einen betroffenen Wellenlängenbereich eine positive gemittelte Dispersion aufweist.

Kurzpuls-Laservorrichtungen haben in jüngster Zeit immer größeres Interesse gefunden, da im Hinblick auf die extrem kurzen Impulsdauern im Femtosekundenbereich, bei Impulsspitzenleistungen von > 1 MW, vorteilhafte Anwendungen in Forschung und Industrie ermöglicht werden. So können derartige Kurzpuls-Laservorrichtungen mit Impulsdauern im Femtosekundenbereich zur zeitaufgelösten Untersuchung der Wechselwirkung zwischen elektromagnetischer Strahlung und Materie verwendet werden. Wünschenswert ist dabei eine Laservorrichtung, die Laserimpulse mit einer Impulsdauer in der Größenordnung von z.B. 10 fs (Femtosekunden) sowie mit einer Energie von beispielsweise 100 nJ bei einer Impulswiederholrate in der Größenordnung von 10 MHz erzeugt. Die im Vergleich zu früheren Laservorrichtungen im Femtosekundenbereich relativ langsame Impulswiederholrate (in der Größenordnung von einigen wenigen MHz, anstatt beispielsweise ca. 100 MHz) bei einem üblichen Titan-Saphir-fs-Laser ist deshalb erwünscht, da dann eine höhere Impulsspitzenintensität erzielt werden kann, die für viele Anwendungen im Bereich größer als 10¹³ W/cm² ist. Derartige vergleichsweise niedrige Repetitionsraten, die umgekehrt eine relativ lange Impulsumlaufzeit im Laserresonator bedeuten, bringen jedoch rein rechnerisch eine entsprechende Erhöhung der Länge des Resonators, z.B. von 2 m auf 16 m, wodurch sich die Abmessungen der Laservorrichtung vergrößern.

Basierend auf einer frühen Arbeit von D. Herriott et al., "Off-Axis Paths in Spherical Mirror Interferometers", Applied Optics, April 1964, Vol. 3, Nr. 4, Seiten 523-526, wurde bereits eine Verlängerung der Impulsumlaufzeiten in einer Laservorrichtung durch Vorsehen eines "multiple-pass"-Resonatorteils, auch "Mehrfachreflexions"-Teleskop bzw. kurz "Teleskop" genannt, vorgeschlagen, vgl. z.B. AT-A-763/2002; oder S.H. Cho et al., "Generation of 90-nJ pulses with a 4-MHz repetition-rate Kerr-lens mode-locked Ti:Al2O3 laser operating with net positive and negative intracavity dispersion", Optics Letters, 15. April 2001, Vol. 26, Nr. 8, Seiten 560-562; sowie A. Poppe et al., "A Sub- -10 fs, 2.5-MW Ti:Sapphire Oscillator", Ultrafast Optics 1999, S. 154-157, Ascona, Schweiz (1999). Mit einem solchen Teleskop gelingt es, in bautechnisch vorteilhafter Weise durch einen Mehrfachdurchlauf, aufgrund einer Mehrzahl von Reflexionen an einander gegenüberstehenden Spiegeln, die Impulsumlaufzeit zu erhöhen und dadurch die Repetitionsrate herabzusetzen, beispielsweise von ca. 100 MHz auf einige wenige MHz. Dadurch ist es möglich, den Energieteil des pro Umlauf ausgekoppelten Impulsteiles entsprechend zu erhöhen, d.h. es kann bei einer gleichbleibenden Durchschnitts-Ausgangsleistung eine deutlich höhere Ausgangsimpulsenergie sowie Spitzenleistung erzielt werden.

Als nachteilig und limitierend haben sich dabei jedoch nichtlineare optische Effekte erwiesen, die durch die hohe Spitzenintensität im Laserkristall auftreten, und die zu einem Aufsplitten des jeweiligen hochenergetischen, im Resonator zirkulierenden Lichtimpulses in mehrere schwächere Pulse führen.

Dem kann entgegengewirkt werden, indem der Betrag der (negativen) Resonatordispersion vergrößert wird, was jedoch unweigerlich zu einer Verringerung der erzielbaren Bandbreite und somit zu deutlich längeren Pulsdauern führt. Andererseits wurde im vorstehend erwähnten Artikel von S. Cho et al. "Generation of 90-nJ pulses with a 4-MHz repetition rate Kerr-lens mode-locked Ti:Al₂O₃ laser operating with net positive and negative intracavity dispersion" bereits vorgeschlagen, die Laservorrichtung bei einer insgesamt positiven Dispersion zu betreiben, wobei sich dann stark "gechirpte" Pulse ( auch "gezirpte" Pulse genannt) im Pikosekundenbereich, d.s. Pulse mit einer deutlich reduzierten Spitzenleistung, ausbilden. Durch einen externen, d.h. außerhalb des Resonators, aufgebauten sogen. "Kompressor" (mit Prismen, mit Gittern, mit Spiegeln bzw. mit einer Kombination daraus) können die Pulse anschließend wieder auf Pulsdauern von wenigen Femtosekunden komprimiert werden, wobei damit eine Erhöhung der Spitzenleistung einhergeht. Gemäß dem genannten Dokument von S. Cho et al. wurde in diesem Betriebszustand eine (relativ kleine) spektrale Bandbreite von 19 nm und eine Pulsdauer von 80 fs erreicht. Zur Dispersionskontrolle innerhalb des Resonators wurde ein Prismenpaar verwendet.

Um eine größere Bandbreite und daher kürzere Pulse zu erhalten, wäre es jedoch, wie Untersuchungen gezeigt haben, notwendig, dass die Netto-Gesamtdispersion im Resonator über den entsprechenden, gewünschten Spektralbereich möglichst konstant ist. Es hat sich aber gezeigt, dass ein Prismenpaar unweigerlich auch eine Dispersion höherer Ordnung einfügt (d.h. die Dispersion 2ter Ordnung (GDD) ist nicht konstant über die Bandbreite), und dass die bekannte Anordnung tatsächlich nicht geeignet ist, die angestrebten kürzeren Pulse bzw. größeren Bandbreiten zu erzeugen.

Es ist nun Aufgabe der Erfindung, hier Abhilfe zu schaffen und eine Kurzpuls-Laservorrichtung der eingangs angeführten Art vorzusehen, bei der es möglich ist, in effizienter Weise die angestrebten kurzen Laserpulse bzw. die gewünschte große Bandbreite zu erzielen.

Die erfindungsgemäße Kurzpuls-Laservorrichtung der eingangs angeführten Art ist **dadurch gekennzeichnet, dass** die Einstellung der positiven gemittelten Dispersion des Resonators mit Hilfe der Spiegel des Resonators durchgeführt ist, von denen zumindest einige in an sich bekannter Weise als dispersive Spiegel ausgeführt sind.

Bei der vorliegenden Kurzpuls-Laservorrichtung gelingt es durch die Kombination von verschiedenen dielektrischen, dispersiven Spiegeln einen nahezu beliebigen Dispersionsverlauf über die vorgesehenen Laserfrequenzen zu erreichen, wobei es an sich bekannt ist, die mit einer Vielzahl von dielektrischen Schichten aufgebauten Spiegel (deren Aufbau und Wirkung nachfolgend noch näher erläutert werden wird) auf Basis der Materialwahl und der Wahl der Schichtdicken so auszubilden, dass jeweils eine gewünschte Dispersion im fraglichen Wellenlängenbereich erzielt wird. In der Folge kann daher die Gesamt-Dispersion im Resonator, die sich aus der Summe der Dispersionswerte aller Laserkomponenten zusammensetzt, nämlich aus der Dispersion des Laserkristalls, der Luft im Resonator, der Spiegel und etwaiger zusätzlicher Komponenten, so eingestellt werden, dass sie über den Spektralbereich des Pulsspektrums gemittelt einen positiven Wert ergibt, um den gewünschten Betriebszustand zu erreichen, in dem die Pulse im Resonator stark "gechirpt" werden und die Spitzenintensität daher abgesenkt wird. Insbesondere ist es dabei auch möglich, die Gesamt-Dispersion über einen weiten Wellenlängenbereich innerhalb eines Toleranzbandes im positiven Dispersionsbereich zu halten, so dass eine verhältnismäßig große Bandbreite - und somit eine äußerst geringe Fourier-limitierte Pulsdauer - erzielt wird. Dies wird auf einfachste Weise mit den angesprochenen dispersiven Spiegeln ermöglicht, wobei Einzelspiegel, die jeweils unterschiedliche Dispersionsverläufe, mit unvermeidlichen Fluktuationen, aufweisen, je nach Zielvorstellung kombiniert werden, um so den gewünschten Gesamt-Dispersionsverlauf beispielsweise über einen Wellenlängenbereich von mehr als 280 nm zu erreichen. Bei entsprechend ausgebildeten dispersiven Spiegeln mit geringeren Fluktuationen im Dispersionsverhalten können sogar noch größere Wellenlängenbereiche mit einem Gesamt-Dispersionsverlauf innerhalb der gewählten bzw. vorgegebenen Toleranzgrenzen erzielt werden.

Für die Sicherstellung einer möglichst großen Bandbreite hat es sich auch als vorteilhaft erwiesen, wenn der positive Gesamt-Dispersionsbereich so gewählt wird, dass die gemittelte Dispersion nur vergleichsweise gering positiv ist und beispielsweise in einem Bereich zwischen 0 und 100 fs², insbesondere in einem Bereich zwischen 0 und 50 fs², liegt.

Für die Dispersionskontrolle können an sich nur einzelne Spiegel des Resonators herangezogen werden; mit Vorteil werden, um alle Einstellungsmöglichkeiten optimal auszuschöpfen, alle Spiegel des Resonators als dispersive Spiegel, vorzugsweise mit negativer Dispersion, ausgebildet. Überdies werden aus diesem Grund insbesondere auch die Spiegel des Mehrfachreflexions-Teleskops als dispersive Spiegel, vorzugsweise mit negativer Dispersion, vorgesehen.

Es kann sich auch vielfach als günstig erweisen, wenn zur ergänzenden Dispersionsfeineinstellung im Resonator eine (kleine) variable Größe an positiver Dispersion eingeführt wird, z.B. mittels zweier knapp beieinander liegender und entgegengesetzt orientierter, an sich bekannter Glaskeile.

Zur Einstellung der gewünschten positiven Netto-Dispersion des Resonators kann an sich auch in Kombination mit den angesprochenen dispersiven Spiegeln der Einsatz eines Prismenpaares vorgesehen werden, wenngleich in der Regel eine Dispersionskontrolle nur mit den dispersiven Spiegeln, gegebenenfall mit den vorgenannten Glaskeilen, zu bevorzugen sein wird.

Zur bevorzugten passiven Modenverkopplung (an sich wäre im Rahmen der Erfindung auch eine aktive Modenverkopplung denkbar)kann bei der vorliegenden Kurzpuls-Laservorrichtung das an sich bekannte "Kerr-lens mode locking"-Prinzip oder aber auch, wie ebenfalls an sich bekannt, ein sättigbarer Absorber vorgesehen werden. Der sättigbare Absorber kann im Strahlengang im Resonator angeordnet werden, es kann jedoch bevorzugt auch ein Endspiegel des Resonators als sättigbarer Absorber-Reflektor vorgesehen werden.

Die erfindungsgemäße Kurzpuls-Laservorrichtung kann mit besonderem Vorteil auf dem Gebiet der Materialbearbeitung eingesetzt werden, wo im Zuge der zunehmenden Miniaturisierung feinste Strukturen exakt und mit hoher Geschwindigkeit zu fertigen sind. Die vorliegende Kurzpuls-Laservorrichtung, die eine hohe Ausgangspulsenergie und eine hohe Wiederholrate ermöglicht, kann hiefür ideal eingesetzt werden, wobei sich insbesondere als vorteilhaft erweist, dass bei der vorliegenden Kurzpuls-Laservorrichtung ein Arbeiten knapp über der Zerstörschwelle (d.h. der Schwellenenergie zur Materialzerstörung) möglich ist, wobei durch die angesprochene hohe Wiederholrate und die Vielzahl der abgegebenen Impulse eine hohe Abtragsrate und nichtsdestoweniger eine feine Bearbeitung erzielbar sind.

Die Erfindung wird nachfolgend anhand von in der Zeichnung veranschaulichten bevorzugten Ausführungsbeispielen, auf die sie jedoch nicht beschränkt sein soll, noch weiter erläutert. Es zeigen:
Fig. 1 in einem Schema den Aufbau einer Kurzpuls-Laservorrichtung mit Teleskop gemäß der Erfindung;
Fig. 2 eine solche Kurzpuls-Laservorrichtung in ihrer Anordnung auf einer Montageplatte, wobei schematisch auch das Ein-und Auskoppeln des Laserstrahls im Bereich des Teleskops veranschaulicht ist;
Fig. 3 in einem Diagramm den Dispersionsverlauf eines Prismenpaares gemäß Stand der Technik;
Fig. 4 in zwei Kurven A, B den Dispersionsverlauf bei einer erfindungsgemäßen Kurzpuls-Laservorrichtung (Kurve A) bzw. bei einer Laservorrichtung gemäß Stand der Technik, mit so genannten Fused Silica-Prismen zur Einführung einer negativen Dispersion im Resonator (Kurve B);
Fig. 5 in einem Diagramm ein Autokorrelations-Messergebnis mit der Signalintensität in beliebiger Einheit über der Zeit (ebenfalls in beliebiger Einheit); und
Fig. 6 in einem Diagramm ein zu dieser gemessenen Autokorrelation gemäß Fig. 5 gehörendes Spektrum.

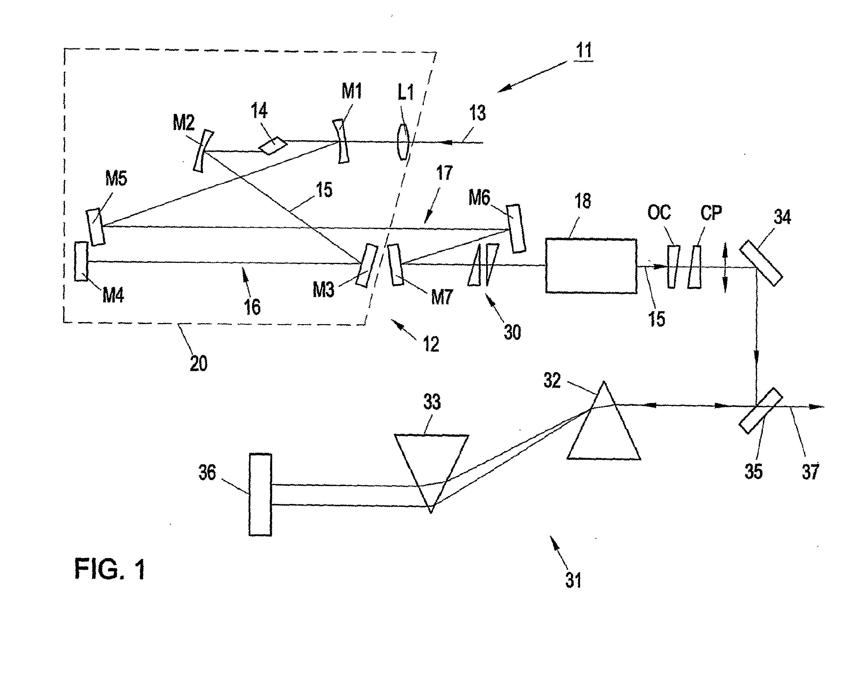

In Fig. 1 ist schematisch eine Kurzpuls-Laservorrichtung 11 veranschaulicht, in der für die Kurzpulserzeugung z.B. das an sich bekannte "Kerr-lens mode locking"-Prinzip verwendet wird.

Die Laservorrichtung 11 weist gemäß Fig. 1 einen Resonator 12 auf, dem ein Pumpstrahl 13 aus einem Pumplaser, z.B. aus einem frequenzverdoppelten Festkörperlaser, zugeführt wird. Der Pumplaser selbst ist der Einfachheit halber in Fig. 1 weggelassen und gehört dem Stand der Technik an.

Nach Durchlaufen einer Linse L1 und eines dichroischen Spiegels M1 regt der Pumpstrahl 13 einen Laserkristall 14 an, im vorliegenden Beispiel einen Titan:Saphir(Ti:S)-Festkörperlaser-kristall. Der dichroische Spiegel M1 ist für den Pumpstrahl 13 durchlässig, jedoch hochreflektierend für den Ti:S-Laserstrahl. Dieser Laserstrahl 15, der Resonatorstrahl, trifft dann auf einen Laserspiegel M2 auf und wird von diesem zu einem Laserspiegel M3 reflektiert. Dieser Laserspiegel M3 reflektiert den Laserstrahl wieder zu einem Laserspiegel M4, von wo der Laserstrahl 15 zu den Laserspiegeln M3, M2 und M1 zurück reflektiert wird, wobei er den Laserkristall 14 ein zweites Mal durchläuft. Dieser Resonatorteil mit den Spiegeln M2, M3 und M4 bildet einen so genannten kurzen Resonatorarm 16.

Vom Spiegel M1 wird der Laserstrahl 15 dann zu einem Laserspiegel M5 und von diesem zu einem Laserspiegel M6 sowie zu einem weiteren Laserspiegel M7 reflektiert, wodurch ein zweiter, langer Resonatorarm 17 gebildet ist. Vom Laserspiegel M7 gelangt der Laserstrahl 15 in ein in Fig. 1 nur schematisch gezeichnetes Teleskop 18 und von diesem zu einem als Auskoppelspiegel OC fungierenden Endspiegel. Über diesen Auskoppelspiegel OC wird ein Teil des Laserstrahls 15 unter Vorsehen einer Kompensationsmöglichkeit ausgekoppelt, wobei beispielhaft ein Kompensationsplättchen CP in Fig. 1 dargestellt ist.

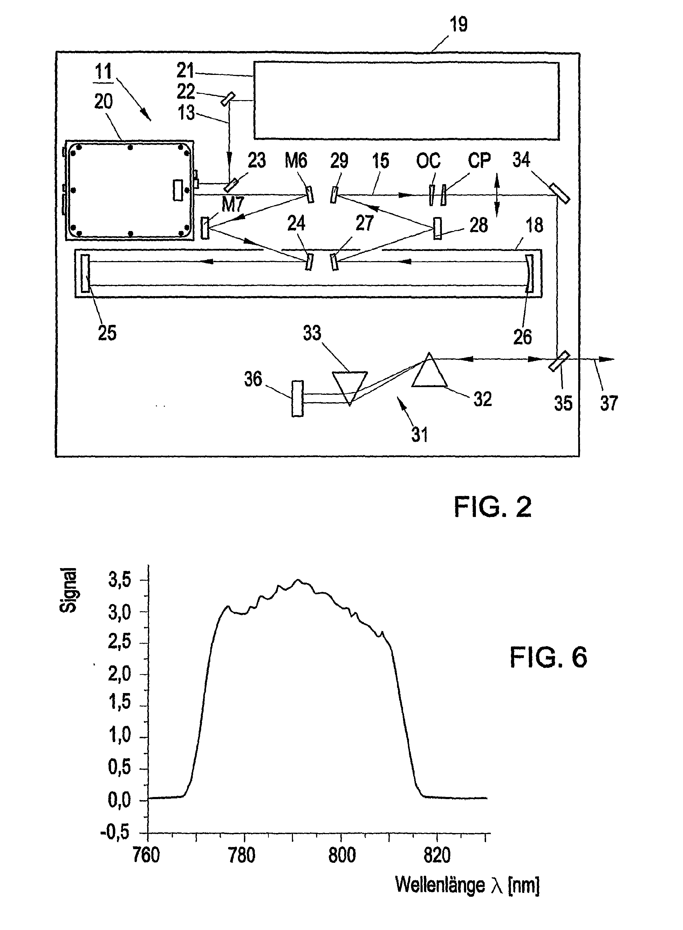

Der Laserkristall 14 ist ein planparalleler Körper, welcher optisch nichtlinear ist und ein Kerrelement bildet, welches für höhere Feldstärken des Laserstrahls 15 eine größere wirksame optische Dicke besitzt, hingegen eine geringere wirksame Dicke aufweist, wo die Feldstärke bzw. Intensität des Laserstrahls geringer ist. Dieser an sich bekannte Kerreffekt wird zur Selbstfokussierung des Laserstrahls 15 ausgenutzt, d.h. der Laserkristall 14 bildet für den Laserstrahl 15 eine Fokussierungslinse. Die Modenverkopplung kann weiters in an sich herkömmlicher Weise z.B. mit Hilfe einer in Fig. 1 und 2 nicht näher gezeichneten Blende (vgl. z.B. AT 405 992 B) realisiert werden; es wäre aber auch denkbar, einen der Endspiegel, z.B. M4, als sättigbaren Bragg-Reflektor bzw. sättigbaren Absorber auszubilden und so zur Modenverkopplung einzusetzen.

Die Spiegel M1, M2 ... M7 sind in Dünnschichttechnik ausgeführt, d.h. sie sind je aus vielen Schichten aufgebaut, die bei der Reflexion des eine große spektrale Bandbreite aufweisenden ultrakurzen Laserpulses ihre Funktion ausüben und eine "maßgeschneiderte" Dispersion einführen. Diese Spiegel nützen entweder resonante Prozesse aus (Gires-Tournois Interferometer, GTI), oder es handelt sich um so genannte "gechirpte" Spiegel (chirped mirrors). Bei diesen dringen die verschiedenen Wellenlängenkomponenten des Laserstrahls 15 unterschiedlich tief in die Schichten des jeweiligen Spiegels ein, bevor sie reflektiert werden. Dadurch werden die verschiedenen Wellenlängenkomponenten verschieden lang am jeweiligen Spiegel verzögert; die kurzwelligen Komponenten werden z.B. weiter außen (d.h. zur Oberfläche hin) reflektiert, die langwelligen Anteile hingegen tiefer im Spiegel. Dadurch werden die langwelligen Komponenten gegenüber den kurzwelligen Komponenten zeitlich verzögert. Auf diese Weise wird eine Dispersionskompensation insofern erhalten, als im Zeitbereich besonders kurze Pulse (vorzugsweise im Bereich von 10 fs und darunter) ein breites Frequenzspektrum besitzen; dies kommt daher, dass die verschiedenen Frequenzkomponenten des Laserstrahls 15 im Laserkristall 14 einen unterschiedlichen Brechungsindex "sehen", d.h. die optische Dicke des Laserkristalls 14 ist für die verschiedenen Frequenzkomponenten verschieden groß, und die verschiedenen Frequenzkomponenten werden daher beim Durchlaufen des Laserkristalls 14 verschieden verzögert. Diesem Effekt wird durch die genannte Dispersionskompensation an den Dünnschicht-Laserspiegeln M1, M2 ... M7 begegnet.

Im Betrieb wird bei jedem Umlauf des Laserstrahls 15 im kurzen Resonatorarm 16 sowie im langen Resonatorarm 17 wie bereits erwähnt ein Teil (z.B. 30%) des Laserpulses mit Hilfe des Auskoppelspiegels OC ausgekoppelt. In der Praxis kann die Länge eines Laserresonators 12 ohne Teleskop 18 ca. 2 m betragen, wobei beispielsweise eine Repetitionsrate entsprechend einer Frequenz von 75 bis 100 MHz, z.B. 80 MHz, erzielt wird. Um nun durch Erhöhung der Umlaufzeit und damit durch Reduzierung der Repetitionsrate eine höhere Pulsspitzenleistung, also Pulsenergie, in Hinblick auf den Einsatz der Laservorrichtung 11 beispielsweise für Materialbearbeitungen zu erzielen, wird die Länge des Laserresonators 12 durch den Einbau des Teleskops 18 vergrößert. Bei einer Verachtfachung der gesamten Resonatorlänge, also beispielsweise bei einer Resonatorlänge von ca. 15 m oder 16 m, kann dann die Repetitionsrate beispielsweise bei ca. 10 MHz liegen. Um diese großen Weglängen für die Laserpulse zu erzielen, ist im Teleskop 18 eine Spiegelanordnung vorgesehen, um eine Mehrfachreflexion des Laserstrahls 15 zu erzielen, so dass die Baulänge des Teleskops 18 entsprechend den Mehrfachreflexionen verkürzt werden kann.

In Fig. 2 ist die Anordnung einer solchen Laservorrichtung 11 gemäß Fig. 1 auf einer rechteckigen Montageplatte 19 schematisch veranschaulicht, die eine Größe von beispielsweise 900 mm mal 450 mm aufweist. Auf dieser Montageplatte 19 ist der in Fig. 1 mit strichlierten Linien umrahmte Teil 20 des Laserresonators 12 in einem Gehäuse gekapselt angebracht, und weiters ist auf der Montageplatte 19 auch der Pumplaser 21 angeordnet, von dem der Pumpstrahl 13 über zwei Spiegel 22, 23 dem Laserresonatorteil 20 zugeführt wird. Aus diesem Resonatorteil 20 tritt der Laserstrahl 15 in Richtung des Laserspiegels M6 aus, von dem er wie beschrieben zum Laserspiegel M7 reflektiert wird. Von dort gelangt der Laserstrahl 15 in das Teleskop 18, wobei im Teleskop 18, z.B. in einem Gehäuse, ein Einkoppelspiegel 24 in einen der mehreren Strahlengänge zwischen zwei einander gegenüberstehenden Teleskop-Spiegeln 25, 26 angeordnet ist. Dieser Einkoppelspiegel 24 reflektiert den Laserstrahl 15 zum einen, in Fig. 2 linken, planen Teleskop-Spiegel 25, der den Laserstrahl 15 sodann zum gegenüberliegenden, konkav gekrümmten Teleskop-Spiegel 26 reflektiert. Zwischen diesen beiden Teleskop-Spiegeln 25, 26 wird der Laserstrahl 15 dann mehrmals, z.B. acht mal, hin und her reflektiert, wobei am konkav gekrümmten Teleskop-Spiegel 26 in diesem Beispiel insgesamt 8 Reflexpunkte, entsprechend den acht Laserstrahl-Reflexionen, auf einer gedachten Kreislinie um das Zentrum des konkaven Spiegels 26 herum vorliegen, wie dies im Übrigen in der AT-A-763/2002 näher erläutert wird.

Aus dem Teleskop 18 wird schließlich der Laserstrahl 15 mit Hilfe eines Teleskop-Auskoppelspiegels 27 ausgekoppelt, der nahe dem Einkoppelspiegel 14 im selben Strahlengang wie dieser angeordnet ist, und der den Laserstrahl 15 zu einem weiteren Spiegel 28 reflektiert, von wo der Laserstrahl 15 über einen Spiegel 29 zum Auskoppelspiegel OC gelangt. Diese Spiegel 28, 29 (und ebenso die Spiegel 22 bis 27) sind der Einfachheit halber in der schematischen Darstellung von Fig. 1 nicht näher veranschaulicht.

Ein wichtiger Aspekt bei einer Kurzpuls-Laservorrichtung mit verlängerter Laserpuls-Umlaufzeit ist die Stabilität der Laserschwingung, wobei eine entsprechende Anpassung im Hinblick auf die durch die einzelnen Spiegel bewirkten Abbildungen des Laserstrahlquerschnitts vorzunehmen ist. Ein weiterer bedeutsamer Aspekt, der gerade für industrielle Anwendungen, also im Fall von Materialbearbeitungen, besonders wichtig ist, ist die Kompaktheit der Laservorrichtung 11; die erwähnten Abmessungen von z.B. 900 mm x 450 mm entsprechen herkömmlichen Lasergeräten für die Industrie, wobei jedoch hier (s. Fig. 2) zusätzlich der Teleskopteil 18 - der auch eine eigene Baueinheit bilden kann - eingebaut ist, so dass ohne Abmessungsvergrößerung die gewünschten längeren Umlaufzeiten des Laserstrahls 15 und damit die höheren Pulsenergien erzielt werden. Angestrebt werden dabei Pulsenergien in der Größenordnung von mehreren hundert nJ anstatt früher weniger als 10 nJ. Damit können Spitzenpulsleistungen von mehr als 2 MW erzielt werden.

In der Praxis hat sich hiebei jedoch gezeigt, dass zufolge der hohen Spitzenintensität im Laserkristall nichtlineare optische Effekte auftreten, die sich für den gewünschten Effekt der Erzielung einer erhöhten Ausgangsimpulsenergie bzw. Spitzenleistung bei konstant bleibender Durchschnitts-Ausgangsleistung als einschränkend erwiesen haben. Die erwähnten nichtlinearen optischen Effekte führen insbesondere zu einem Aufspalten der im Resonator der Laservorrichtung zirkulierenden hochenergetischen Laserimpulse in jeweils mehrere Impulse von geringerer Intensität. Um dem entgegenzuwirken, ist ein Betrieb des Laseroszillators bzw. -resonators in einem netto-positiven Dispersionsbereich zweckmäßig, wobei sich dann stark gechirpte Pulse im Pikosekunden-Bereich bilden, deren Spitzenleistung deutlich reduziert ist. Im Stand der Technik (s. S. Cho et al., wie eingangs angegeben) ist in diesem Zusammenhang vorgeschlagen worden, außerhalb des Resonators einen mit Hilfe von Prismen, Gittern oder Spiegeln bzw. einer Kombination hievon aufgebauten "Kompressor" die Laserpulse anschließend wieder auf Pulsdauern von wenigen fs zu komprimieren, wobei dementsprechend die Spitzenleistung wieder erhöht wird. Um im Resonator die Dispersion insgesamt einzustellen, wurde gemäß diesem Stand der Technik ein Paar von Prismen eingesetzt.

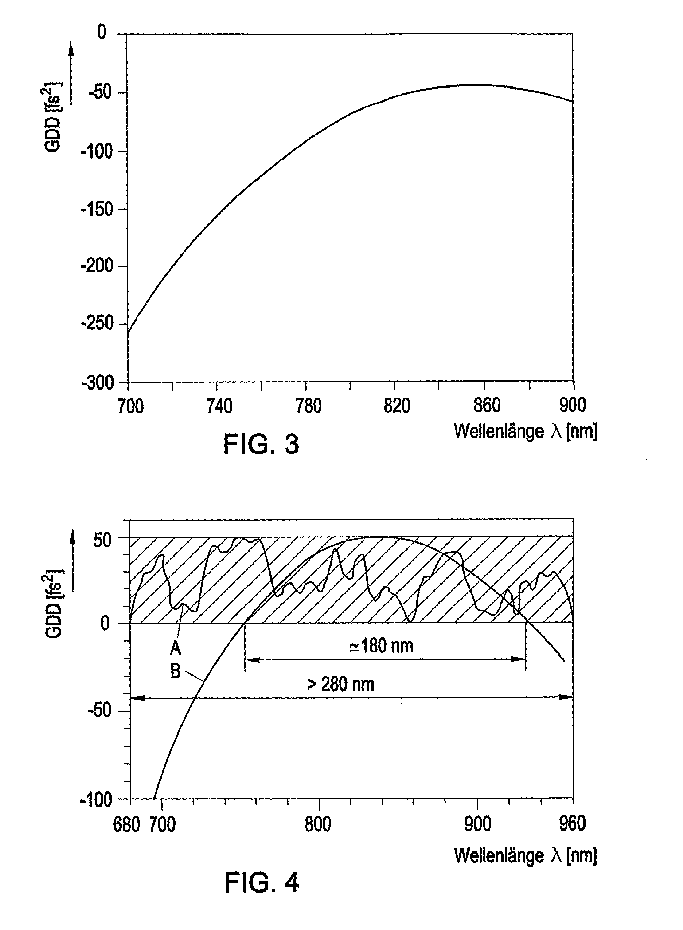

Es hat sich jedoch gezeigt, dass es zur Erzielung kürzerer Pulse und damit einhergehend einer größeren Bandbreite erforderlich ist, dass die Gesamt-Dispersion im Resonator über den entsprechenden Spektralbereich (d.h. die entsprechende Bandbreite) möglichst konstant gehalten wird, wobei es überdies von Vorteil ist, wenn die Gesamtdispersion nur geringfügig positiv ist, d.h. nur wenig über Null liegt, insbesondere nur einige wenige 10 fs² beträgt. Ein mit einem Prismenpaar versehener Resonator, wie im Stand der Technik vorgesehen, bewirkt jedoch zwangsläufig eine Dispersion höherer Ordnung, so dass die gewünschte Konstanz über die angestrebte Bandbreite nicht erzielt werden kann. Dies ist aus der Darstellung in Fig. 3 ersichtlich, in der der Dispersionsverlauf eines mit Prismen aus Quarzglas ("Fused Silica") realisierten Kompressors veranschaulicht ist. Dabei ist ersichtlich, dass in einem Wellenlängenbereich von 700 nm bis 900 nm die Dispersion GDD (GDD - Group Delay Dispersion - Gruppenlaufzeit-Dispersion) von unter -250 fs² bis knapp unter -50 fs² verläuft, wobei ein Maximum von über -50 fs² bei ungefähr 850 nm gegeben ist. Die Schwankung der GDD liegt somit in dem angeführten Spektralbereich bei über 200 fs². Bei einem derartigen Verlauf der Dispersion ist es nicht möglich, die angestrebten kurzen Laserpulse zu erzeugen.

Bei der vorliegenden Kurzpuls-Laservorrichtung 11 wird dagegen eine Dispersionseinstellung mit Hilfe der verschiedenen dielektrischen Spiegel, z.B. M1 bis M7, gegebenenfalls auch der Teleskop-Spiegel 25, 26 etc., bewerkstelligt, wobei entsprechend hinsichtlich Schichtaufbau und Schichtdicken ausgebildete dispersive Spiegel, wie diese an sich bekannt sind, in Verbindung mit den übrigen Elementen der Laservorrichtung 11 kombiniert werden, um so die gewünschte positive Netto-Dispersion des gesamten Resonators 12 einzustellen. Dabei wird die Dispersion innerhalb eines Bandbereichs von 0 bis 100 fs², vorzugsweise von 0 bis 50 fs², gehalten, wie in Fig. 4 schematisch mit dem schraffierten Bereich veranschaulicht ist, wobei die Kurve A den Dispersionsverlauf bei einem praktischen Ausführungsbeispiel der Erfindung veranschaulicht. Zu Vergleichszwecken ist in Fig. 4 auch mit einer Kurve B der Dispersionsverlauf veranschaulicht, der dann erhalten wird, wenn gemäß Stand der Technik (vgl. S. Cho et al.) ein Prismenpaar zur Dispersionskontrolle verwendet wird. In Kombination mit den übrigen Komponenten des Laserresonators 12 führt das Prismenpaar, dessen Dispersionsverlauf schematisch in Fig. 3 gezeigt ist, zu dem mit der Kurve B gezeigten Netto-Dispersionsverlauf, wobei ersichtlich ist, dass nur über eine Bandbreite von ungefähr 180 nm die Dispersion im angestrebten Bereich zwischen 0 und 50 fs² liegt. Demgegenüber liegt die Dispersion gemäß Kurve A im gesamten dargestellten Spektralbereich, von 680 nm bis 960 nm, innerhalb des gewünschten Bandes von 0 bis 50 fs², d.h. innerhalb eines Bandes von zumindest 280 nm, in der Regel sogar in einem größeren Band. Hinsichtlich der Kurve B ist dabei noch zu ergänzen, dass sich Prismen aus Quarzglas bereits durch eine relativ geringe Dispersion höherer Ordnung auszeichnen und daher bereits als optimiert anzusehen sind, wobei aber trotzdem wie ersichtlich das Ergebnis wesentlich schlechter ist als im Fall der erfindungsgemäßen Dispersionseinstellung mit Hilfe der dispersiven Spiegel.

Die Verwendung von dispersiven Spiegeln zur Dispersionskontrolle erbringt die erforderliche negative Dispersion innerhalb des Resonators 12 zum Ausgleich der durch andere Komponenten eingeführten positiven Dispersion. So führt beispielsweise der Laserkristall 14 eine positive Dispersion ein, ebenso wie die im Resonator 12 enthaltene Luft. Gegebenenfalls können, wie in Fig. 1 beispielhaft veranschaulicht ist, zwei variable, also verstellbare Glaskeile 30 im Resonator 12, z.B. vor dem Teleskop 18, für eine zusätzliche positive Dispersion angeordnet werden, wobei diese beiden Glaskeile 30 aus Quarzglas bestehen können.

Um auch bei der vorliegenden Kurzpuls-Laservorrichtung 11 nach dem "Chirpen" der Pulse im Resonator diese Pulse anschließend wieder auf Pulsdauern von wenigen fs zu komprimieren, ist ein in den Fig. 1 und 2 ersichtlicher externer "Kompressor" 31 vorgesehen, welcher ebenfalls auf der Montageplatte 19 (s. Fig. 2) montiert wird, der aber auch, ähnlich wie das Teleskop 18, eine eigene Baueinheit bilden kann. In Fig. 1 und 2 ist dieser mit Prismen 32, 33 aufgebaute "Kompressor" 31 schematisch angedeutet. Wie dabei im Einzelnen ersichtlich ist, wird der über den Auskoppelspiegel OC ausgekoppelte Laserstrahl an einem Spiegel 34 zu einem Spiegel 35 reflektiert, der seinerseits den Laserstrahl zu den beiden bereits erwähnten Prismen 32, 33 reflektiert, wo der Laserstrahl zunächst im Hinlauf (gemäß der Darstellung in Fig. 1 und 2 nach links) aufgefächert wird, bis er an einem Endspiegel 36 reflektiert wird. Beim Zurücklaufen des Laserstrahls durch die Prismen 33 und 32 wird der Laserstrahl, der zuvor aufgrund der verschiedenen Wellenlängen im Spektrum und der damit gegebenen verschiedenen Wegzeiten aufgefächert wurde, wieder gebündelt, wobei er gegenüber dem hinlaufenden Laserstrahl etwas versetzt verläuft und dadurch am Spiegel 35 vorbei ausgekoppelt wird, wie in Fig. 1 mit einem Pfeil 37 angedeutet ist.

In einem konkreten Ausführungsbeispiel wurden die in der nachfolgenden Tabelle angeführten Dispersionswerte für die einzelnen Elemente bzw. für den gesamten Resonator 12 bei den angegebenen Wellenlängen 700 nm, 800 nm und 900 nm erhalten.

**Tabelle**

| | ***Laser-kristall 14*** | ***Luft*** | ***Teleskop 18*** | ***Glaskeile 30*** | ***Dispersive Spiegel*** | ***Gesamt*** |
|---|---|---|---|---|---|---|
| **700nm** | +430fs² | +669fs² | -1690fs² | +1078fs² | -447fs² | +40fs² |
| **800nm** | +348fs² | +562fs² | -1460fs² | +865fs² | -297fs² | +18fs² |
| **900nm** | +277fs² | +486fs² | -1510fs² | +682fs² | -74fs² | +9fs² |

In dem hier betrachteten Beispiel wurde als Laserkristall 14 ein Ti:Saphir-Kristall mit einer Dicke von 3 mm eingesetzt, was bedeutet, dass bei einem zweimaligen Durchlauf wie vorstehend beschrieben insgesamt eine Dicke von 6 mm zu berücksichtigen ist. Dieser zweimalige Umlauf vom Auskoppelspiegel OC bis wieder zum Auskoppelspiegel OC trifft im Übrigen auch auf alle anderen Elemente zu.

Im beispielhaften Resonator 12 mit einer 10 MHz-Repititionsrate war eine Länge von 15 m pro Durchlauf gegeben, so dass eine entsprechende Dispersion durch die Luft im Resonator 12 zu berücksichtigen war.

Im Teleskop 18 waren jeweils acht Reflexionen pro Durchlauf und pro Teleskopspiegel 25 bzw. 26 zu berücksichtigen.

Die Glaskeile 30 im Resonator 12, die zusätzlich eine positive Dispersion einführen, hatten eine Dicke von 12 mm, d.h. es waren für die zwei Durchgänge insgesamt 24 mm zu berücksichtigen.

Zur Dispersionseinstellung wurden weiters speziell sechs dispersive Spiegel M6, M7, 24, 27, 28 und 29 eingesetzt, die ein entsprechendes Spiegeldesign aufwiesen.

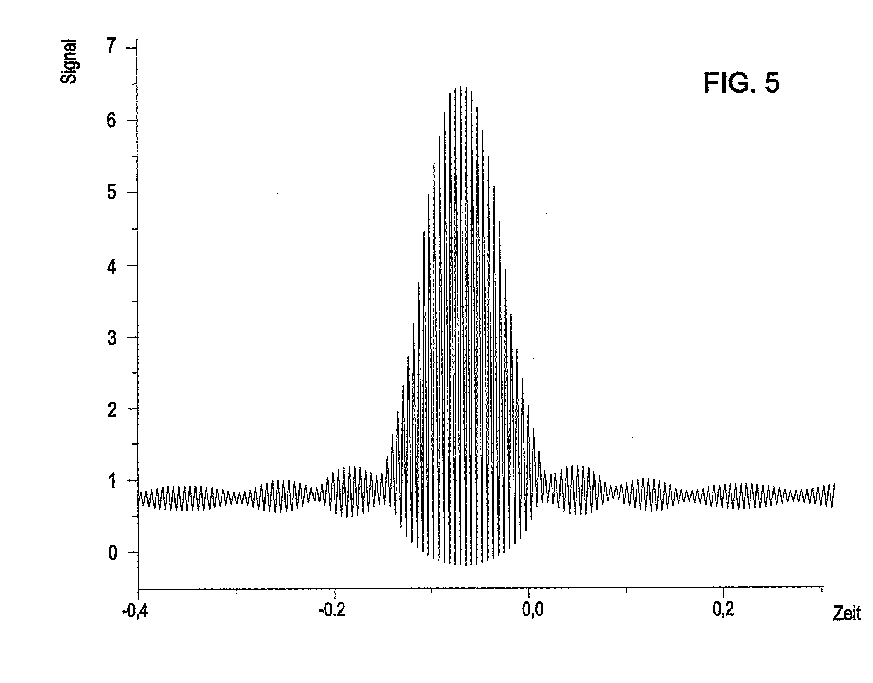

In Fig. 5 ist in einem Diagramm einer in einem konkreten Versuchsaufbau gemessenen Signal-Autokorrelation die Signalintensität (in beliebiger Einheit) über der Zeit (ebenfalls in beliebiger Einheit) veranschaulicht, wobei daraus eine Pulsdauer von 27 fs ermittelbar ist.

In Fig. 6 ist ein zugehöriges Spektrum veranschaulicht, wobei wiederum die Signalintensität in beliebiger Einheit, nun über der Wellenlänge λ in nm, veranschaulicht ist.

Die in diesem Beispiel erzielte Pulsenergie war höher als 200 nJ, und zwar bei einer Repititionsrate von 11 MHz, bei einem Wellenlängenbereich Δλ von ca. 40 nm.

## Patentansprüche

1. Kurzpuls-Laservorrichtung mit vorzugsweise passiver Modenverkopplung, mit einem Resonator (12), der einen Laserkristall (14) sowie mehrere Spiegel (M1-M7; 22, 23, OC) enthält, von denen einer einen Pumpstrahl-Einkoppelspiegel (22) und einer einen Laserstrahl-Auskoppelspiegel (OC) bildet, mit einem die Resonatorlänge vergrößernden Mehrfachreflexions-Teleskop (18), wobei der Resonator (12) im Betrieb über einen betroffenen Wellenlängenbereich eine positive gemittelte Dispersion aufweist, **dadurch gekennzeichnet, dass** die Einstellung der positiven gemittelte Dispersion des Resonators (12) mit Hilfe der Spiegel (M1-M7, 22, 23, OC) des Resonators (12) durchgeführt ist, von denen zumindest einige als dispersive Spiegel ausgeführt sind.

2. Kurzpuls-Laservorrichtung nach Anspruch 1, **dadurch gekennzeichnet, dass** die über den betroffenen Wellenlängenbereich gemittelte Dispersion des Resonators (12) in einem Bereich zwischen 0 und 100 fs² eingestellt ist.

3. Kurzpuls-Laservorrichtung nach Anspruch 2, **dadurch gekennzeichnet, dass** die gemittelte Dispersion zwischen 0 und 50 fs² beträgt.

4. Kurzpuls-Laservorrichtung nach einem der Ansprüche 1 bis 3, **dadurch gekennzeichnet, dass** alle Spiegel des Resonators (12) dispersive Spiegel sind.

5. Kurzpuls-Laservorrichtung nach Anspruch 4, **dadurch gekennzeichnet, dass** alle Spiegel des Resonators (12) eine negative Dispersion aufweisen.

6. Kurzpuls-Laservorrichtung nach einem der Ansprüche 1 bis 5, **dadurch gekennzeichnet, dass** die Spiegel (25, 26) des Mehrfachreflexions-Teleskops (18) dispersive Spiegel sind.

7. Kurzpuls-Laservorrichtung nach Anspruch 6, negativer Dispersion, **dadurch gekennzeichnet, dass** die Spiegel (25, 26) des Teleskops (18) eine negative Dispersion aufweisen.

8. Kurzpuls-Laservorrichtung nach einem der Ansprüche 1 bis 7, **dadurch gekennzeichnet, dass** zur ergänzenden Dispersionsfeineinstellung im Resonator (12) eins Glaskeil-Paar (30) mit positiver Dispersion angeordnet ist.

9. Kurzpuls-Laservorrichtung nach einem der Ansprüche 1 bis 8, **dadurch gekennzeichnet, dass** zur passiven Modenverkopplung das "Kerr-lens mode locking"-Prinzip verwendet wird.

10. Kurzpuls-Laservorrichtung nach einem der Ansprüche 1 bis 8, **dadurch gekennzeichnet, dass** zur passiven Modenverkopplung ein sättigbarer Absorber (M4) vorgesehen ist.

11. Verwendung einer Kurzpuls-Laservorrichtung nach einem der Ansprüche 1 bis 10 zur Materialbearbeitung.
